# EUROPEAN PATENT APPLICATION

(11) **EP 2 530 581 A2**
(43) Date of publication of application: **05.12.2012**
(21) Application number: 12170038.9
(22) Date of filing: 30.05.2012
(51) Int. Cl.: G06F 3/12

(54) **A method of processing a print job within a printing system, a printing system, and a program**

(30) Priority: 02.06.2011 GB 201109280
(71) Applicant: Canon Europa N.V., 1185 XB Amstelveen (NL)
(72) Inventor: Huster, Karsten, 49536 Lienen (DE)
(74) Representative: Reinders, Christian

(57) **Abstract**

The present invention is generally related to a method of processing a print job within a printing system. The device status of each printer within the network is collected and used for a determination of the energy consumption of the print job. The results of the energy consumption are displayed to a user and the user may designate the most energy efficient printer for printing the print job.

## Description

### BACKGROUND OF THE INVENTION

The present invention is generally related to a method of processing a print job within a printing system, a printing system and a printing program.

More and more complex printing solutions for office environments are used to print and/or scan documents, pictures, charts or presentations in an efficient, secure and printer-independent way. Basically, the relevant documents are converted into a print job with a printer-ready format by an application, such as Microsoft® WORD, and are routed to a central print queue of the printing system. After that, the print job can be released from the print queue by a user for printing out on a printer, designated by a user.

The printer normally has an energy conservation function for reducing the energy consumption of the printer, especially multifunctional printer (MFP), after pre-defined time periods. Especially the heating up of the fuser element of the printer expends a high amount of energy. In this state the printer is in the energy busy-mode. Because of that, after a pre-defined time period without any printing, the heating of the fuser element and the cooling of the electronic circuit board of the printer is turned off and the printer is switched into the energy sleep-mode. If the printer receives a print job, when he is in a sleep-mode, it switches to the busy-mode and heats up the fuser element again before printing. Additionally, some printers also have an idle-mode, which is used after a busy-mode to reduce the energy consumption of the printer more slowly. In the idle-mode the print job could be printed out after a shorter time period of heating compared to the sleep-mode.

There are huge differences between the energy consumption of the different energy modes of the printer. For example a multifunctional ink jet device consumes three Watt in the sleep-mode and twenty-one Watt within the busy-mode, which is seven times higher compared to the sleep-mode. Using the printer in an efficient way would help to reduce the energy consumption of the printer and would also save energy costs.

US patent application US 2010/0165376 A1 discloses a printing system including an order management server configured to receive printing orders placed from a plurality of computers via a network. EP 1 926 015 A2 discloses a system to adjust the duration of various power modes based on usage of the device.

It is an object of the present invention to provide enhanced energy consumption monitoring and saving especially in larger printer networks. It is also an additional object of the present invention to assist the user for helping to designate the most convenient printer within a printer network for printing a specific print job in view of energy consumption.

### SUMMARY OF THE INVENTION

According to a first aspect of the present invention there is provided a method of processing a print job within a printing system according to claim 1. The printing system having at least one printer and at least one client terminal for preparing the print job, and the or each printer and the or each client terminal being connected to a network. After collecting the device status of at least one said printer the energy consumption for printing the print job on the printer based on the device status of the printer is determined. A user is displayed the energy consumption for printing the print job on the printer. According to the present invention the energy consumption is not just determined based on the estimated energy consumption based on a fixed consumption per page base. Considering the device status, for example the energy status of the printers: busy-mode, the idle-mode or the sleep-mode, helps to determine a much more accurate energy consumption based on the device status compared to only consumption-per-page estimations.

Advantageously the energy consumption is the actual energy consumption and/or the pre-determined energy consumption and/or the simulated energy consumption of at least one printer or a group of printers or of the print system itself.

It would be appreciated that the device status are the different energy consumption levels of the printer and/or the duration times of the energy consumption levels of the printer, the state of the printer consumables and/or the error state average and resolution time for each error of the printer. The different energy consumption levels may be pre-defined for at least one of the printers, such as sleep-mode, idle-mode or busy-mode, and may be stored on the printer or on a device within the printing system.

Additionally, the energy consumption for printing the print job on the or each printer is determined based on the recent device status of the or each printer in combination with pre-defined consumption values for the or each printer or in combination with the actual energy consumption of the or each printer. Also the energy consumption for printing the print job on the printer may be determined based on the device status of the printer accumulated for a predefined time period in the past. In case the energy consumption for printing the print job on the printer is above a predefined threshold, a notification is sent.

Additionally, the energy consumption for printing the print job on the printer may be expressed in terms of electric energy kilowatt-hours and/or carbon dioxide CO₂ emission. Also the printing system having at least two printers and the device status of each printer is collected. In addition, the energy consumption for printing the print job is determined for each printer within the network. It would be also appreciated that the energy consumption for printing the print job on the or each printer may be displayed on the client terminal and/or at least one of the printers and/or on a print server, managing the transfer of the print jobs within the network, and/or on an additional network device.

In case an alternative printer has a lower energy consumption compared to the energy consumption of an initially chosen printer by the user, the user may be shown the alternative printer on a map and/or with routing information to reach the alternative printer. In accordance with one aspect of the present invention, the actual and future energy consumption of the printer may be simulated based on the recent device status of the printer.

In accordance with another embodiment of the present invention a printing system for processing a print job comprises means for collecting the device status of the printer, means for determining the energy consumption for printing the print job on the printer based on the device status of the printer; and means for displaying a user the energy consumption for printing the print job on the printer.

Another embodiment of the present invention is a printing system for processing a print job and the printing system having at least two printers, at least one client terminal for preparing the print job, at least one print server, and the printers, the client terminal and the or each print server being connected to a network. The printing system comprises means for storing the print job sent by the client terminal via the network to the print server, means for determining the energy consumption for printing the print job on at least one of the printers, means for displaying a user the energy consumption for printing the print job on at least one of the printers, means for designating at least one of the printers by a user to be a designated printer after displaying the energy consumption for the printing of the print job at least one of the printers to the user, and means for releasing the print job on the print server to be printed on the designated printer in case the user accesses to the print server.

Additionally, the client terminal sends the print job via the network to the print server and the print server stores the print job within a print queue and the print queue may be accessible by the user via the network. Also the print server converts the print job into an appropriate printer-ready format, in case the original printer-ready format of the print job may not be processed correctly on the designated printer. At least one of the printers sends the current device status of the at least one of the printers to the print server only in case of a change of the device status of the at least one of the printers. In case the energy consumption for printing the print job on the at least one of the printers may be above a predefined threshold, the print server sends a notification.

In another embodiment of the present invention the energy consumption for printing the print job on the at least one of the printers is displayed on the client terminal and/or at least one of the printers and/or print server and/or on an additional network device. Also the available printers within the network and the energy consumptions for printing the print job on each available printer may be show on a display of at least one of the printers and/or client terminal and/or print server and/or additional network device and one of the available printers may be selected by the user to be the designated printer. In case an alternative printer has a lower energy consumption compared to the energy consumption of an initially chosen printer by the user, the user may be shown the alternative printer on a map and/or with routing information to reach the alternative printer.

Additionally, in case all printers within the network may be in a disadvantageous energy consumption status, the release of the print job on the print server is delayed until at last one of the printers is in an advantageous energy consumption status. According to still another aspect of the invention the print server simulates the actual and future energy consumption of at least one of the printers based on the recent device status of at least one of the printers. Also the energy consumption of at least one of the printers and/or the printing system may be measured by at least one energy meter and control device connected to at least one device of the printing system. In particular the energy consumption of at least one of the printers and/or the printing system may be managed by an additional controlling system based on the device status of at least one of the printers.

According to another embodiment of the present invention a method of processing a print job within a printing system is disclosed and the printing system having at least two printers, at least one client terminal for preparing the print job, and the printers, the client terminal and the print server are connected to a network. After determining the energy consumption for printing the print job on at least one of the printers a user is displayed the energy consumption for printing the print job on at least one of the printers. Additional steps are designating at least one of the printers by a user to be a designated printer in view of the energy consumption for the printing of the print job on at least one of the printers and releasing the print job on the print server to be printed on the designated printer in case the user accesses to the designated printer.

In accordance with one aspect of the present invention, the foregoing and the other objects are achieved by a program and/or a storage medium for processing a print job within a printing system.

### BRIEF DESCRIPTION OF THE DRAWINGS

An embodiment of the present invention will now be described, by way of example only, with reference to the accompanying drawings in which:

Figure 1 is a schematic diagram showing two client terminals and three multifunctional printers (MFP).

Figure 2 shows the main features of the hardware of the multifunctional printer (MFP).

Figure 3 is a chart showing the routing of a print job from the client terminal to the designated printer via one print server.

Figure 4 is a chart showing the routing of one print job by two print servers to the printer, designated by a user.

Figure 5 shows the routing of one print job from the client terminal to a designated printer via a network of print servers.

Figure 6 is a chart showing the different energy consumption modes for a printer in an idealised way compared the actual and predicted energy consumption.

Figure 7 is a Unified Modelling Language (UML) diagram showing one client terminal, one print server and the routing of a print job to one of two printers.

Figure 8 is a chart showing the printing system in combination with an energy management server and energy meter and control devices.

### DESCRIPTION OF THE EMBODIMENTS

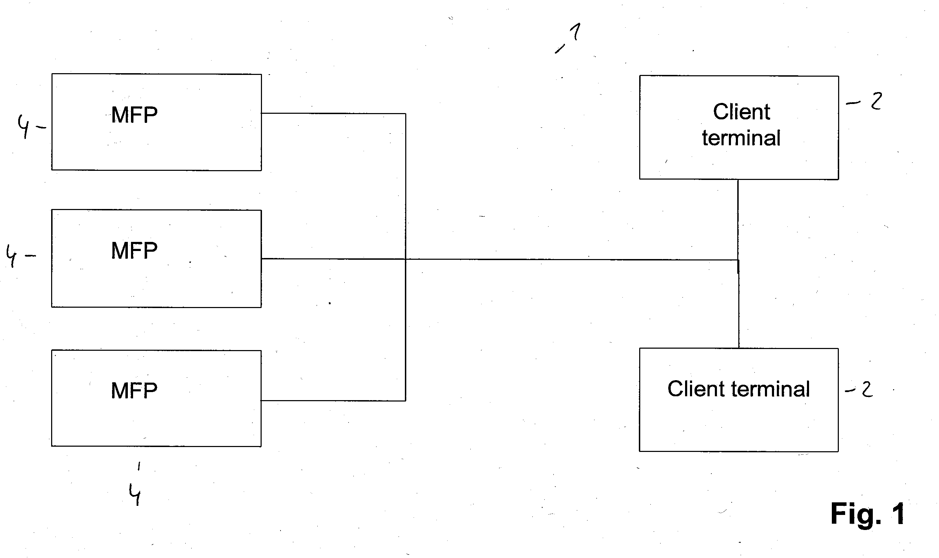

Figure 1 shows a printing system 1 with two client terminals 2 and three multifunctional printers (MFP) 4. The client terminals 2 are configured to communicate with the printers 4, for example based on the HTTP protocol. Use of HTTP protocol avoids difficulty with communication through firewalls between different networks. The printer 4 is identified within the network by a unique address. A device agent installed on at least one of the client terminals 2 and/or printers 4 prepares and releases the print job 10 (not shown in Figure 1) to the printer 4 by using the unique address. Also a printer server 3a (not shown in Figure 1) may be part of the printing system 1 and managing the transfer of print jobs 10 within the printing system 1.

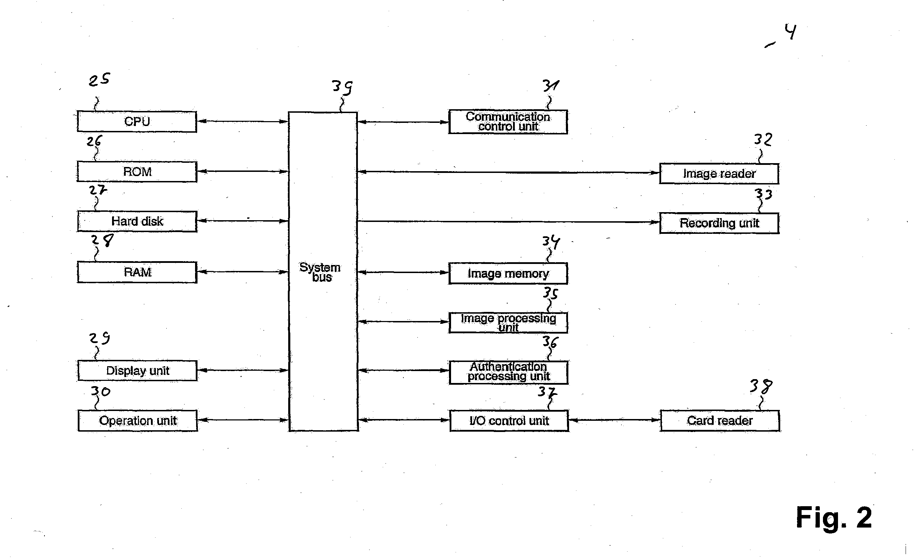

Figure 2 shows the hardware configuration of the printer 4, especially a multifunctional device, with printing, scanning and communication capabilities. The printer 4 comprises a CPU 25, a ROM 26, a hard disk drive 27, and a RAM 28. These components are standard hardware components for computers and other devices and perform their usual functions. The printer 4 further comprises a display unit 29, an operation unit 30, a communication control unit 31, an image reader 32, a recording unit 33, an image memory 34, an image processing unit 35, an authentication unit 36, a card reader 38 and an I/0 control unit 37. The display unit 29 is a touch-screen LCD display provided on the printer 4 to allow a user to make selections and view information on the printer 4, such as requesting the printing of print job stored on the print server 1 (not shown in Fig. 2). The operation unit 30 is a keypad and other buttons to allow the user to enter settings and other information to the printer 4. The communication control unit 31 is provided to allow the printer 4 to communicate over a network, such as LAN, with the print server 3a. The printer 4 may be also a scanner that allows scanning of documents. The recording unit 33, shown in Figure 2, represents parts of the printer 4, dedicated to printing. The recording unit 33 functions to print image data onto a recording medium and output the recording medium for collection by a user. The image memory 34 is a memory provided for storage of image data during scanning by the image reader 32 or printing by the recording unit 33. The image-processing unit 35 represents various application specific integrated circuits (ASIC) provided in the printer 4 in order to increase the speed of certain image processing operations, such as conversion of scanned R,G,B data into C,M,Y,K data during a copying operation. The authentication processing unit 36 is provided in order to authenticate user details received from the card reader 38. Data from the card reader 38 is received at the authentication unit 36 via the I/O control unit 37. The authentication processing unit 36 may be implemented by software run using the CPU 25 and RAM 28 rather than as a separate hardware component. The components 25 to 38 described above are interconnected via a system bus 39.

The printer 4 runs an operating system. In this particular embodiment the operating system is the Multifunctional Embedded Application Platform (MEAP) operating system provided on multifunctional device devices sold by Canon (RTM). The operating system allows the running of JAVA programming applications and also includes a web interface. The operation system also allows the display of the device status and/or the display of the energy consumption of a selected print job 10 (not shown in Fig. 2).

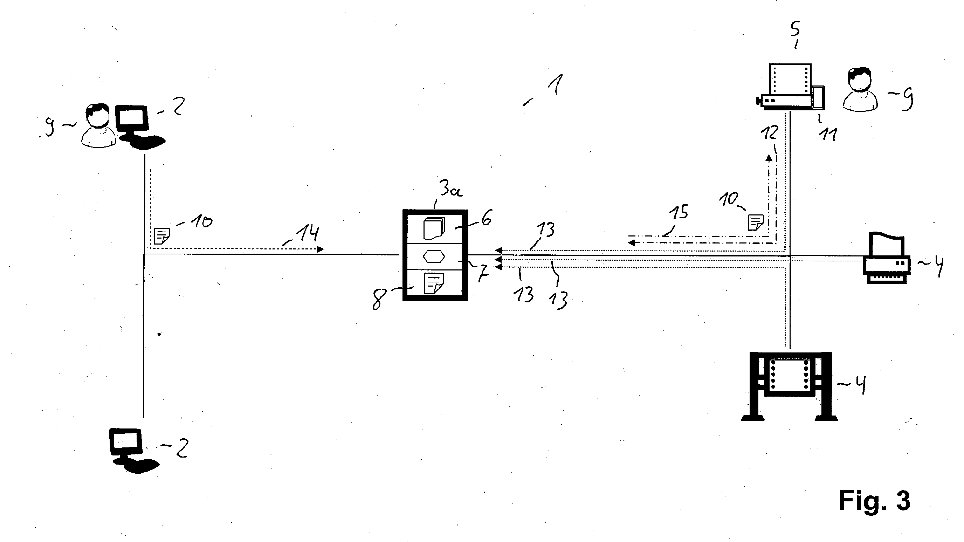

Figure 3 is a chart showing the routing 15 of one print job 10 from the print server 3a to a designated printer 5. The print server 3a is connected with the client terminals 2 and the printers 4,5. The print job 10 is stored on a hard disk of the print server 3a. Also the print server 3a collects 6 for the device status 13 of each printer 4,5 within the printing system 1 and uses this information to determine 7 the energy consumption for the actual print job 10.

The energy consumption is determined based on the device status of each printer 4,5 and in connection with average consumption rates for each specific printer 4,5. Especially, the print server 3a collects the device status of the printer 4,5 within the printing system 1, including the duration time of every device status and/or the duration time of every energy consumption status and/or the average resolution time for each error of the printer 4,5. Therefore the energy consumption isn't not only estimated based on a fixed energy-per-page ratio rather than on the device status of the printer 4,5 and because of that much more accurate compared to existing solutions.

According to the present invention the term "device status" comprises different energy consumption levels (busy-mode, idle-mode, sleep-mode) normally used for each printer 4,5 and the duration times of the energy consumption levels, the state of the printer consumables and/or the error state average and resolution time for each error of each printer. The error state may have an impact on the energy consumption, especially in case of a detected improper or damaged heating system of the printer. In particular, the energy consumption levels are defined for each printer 4,5 by the printer manufacturer, such as disclosed within JP08234946A for example.

Based on at least one of this information about the (present) device status 13 of the printer 4,5 in combination with additional consumption-per-page ratios of each printer 4,5, the energy consumption of each printer 4,5 may be determined by simple mathematical functions, such as multiplication.

The user 9 identifies her/him on one of the printers 4,5, which becomes for this embodiment the designated printer 5, and a display unit 11 shows the estimated energy consumption for printing the print job on one of the printers 4,5. The means 11 for displaying to the user 9 the estimated energy consumption may be part of the display unit 29 of the printer 4 or another device within the printing system 1. After the user 9 accepts the printing of the print job 10 on the designated printer 5, the print job 10 is routed 15 from the print server 3a to the designated printer 5 and is printed on the designated printer 5. Means 8 for storing the print job 10 may be a hard disk within the print server 3a. Additionally the means 6 for collecting the device status of the printers 4,5 are part of the print server 3a. Also the print server 3a comprises means 7 for determining the estimated energy consumption for printing the print job 10 on one of the printers 4, 5.

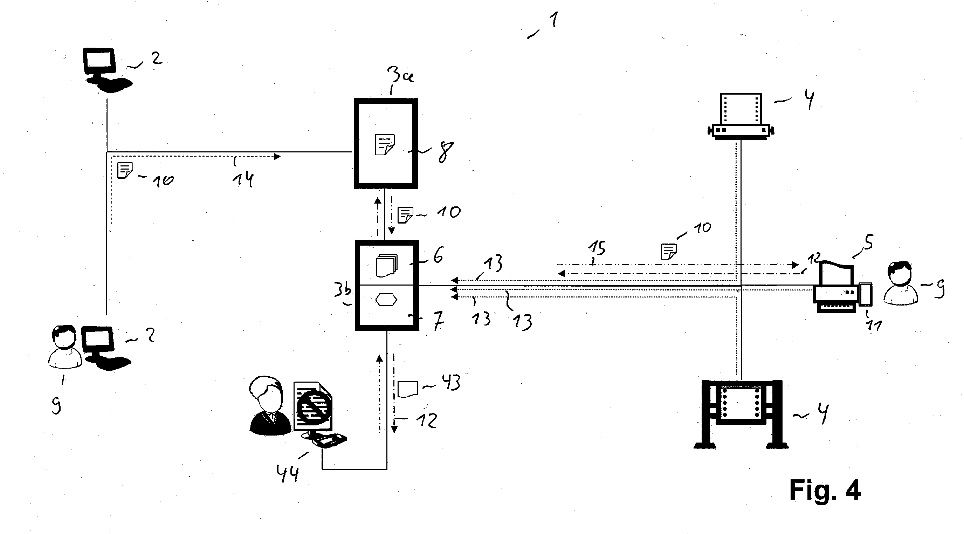

According to Fig. 4, two print servers 3a,3b are connected with two client terminals 2 and three printers 4,5. The user 9 sends the print job 10 from one of the client terminals 2 to the first print server 3a, which just stores 8 the print job 10.

The second print server 3b is connected with the first print server 3a and the second print server 3b comprises means 6 for collecting the device status of the printers 4,5, such as an operation unit in combination with network interface. The print server 3b also comprises means 7 for determining the estimated energy consumption for printing the print job 10 on the designated printer 5, such as an operation system with a CPU on the print server 3b.

The print server 3b converts the print job 10 into an appropriate printer-ready format, in the event that the original printer-ready format of the print job 10 generated by the client terminal 2 may not be processed correctly on the designated printer 5. This conversion may be conducted even on the first print server 3a. The second print server 3b determines the estimated energy consumption based on the collected device status of each printer 4,5. Advantageously, each printer 4,5 sends the current device status to the print server 3a,3b only in case of a change of the device status of at least one of the printers 4,5. This procedure reduces the network traffic and therefore reduces additionally the energy consumption within the printing system 1.

According to another embodiment, the print server 3b determines the estimated energy consumption for printing the print job 10 on each printer 4,5, based on the recent device status of the printer 4,5 in combination with the actual energy consumption of each printer 4,5. The print server 3b determines a forecast or simulation of estimated energy consumption of the printer 4,5 based on the actual device status of the or each printer 4,5. This procedure is much more accurate compared to the determination of the energy consumption on an average energy consumption rate. Additionally, in case the estimated energy consumption for printing the print job 10 on one of the printers 4,5 is above a predefined threshold, the print server 3a,3b sends a notification 43. According to the embodiment of Fig. 4 the notification 43 is sent to an administrator terminal 44 and an administrator may decide if the user 9 is allowed to print the print job 10 on the designated printer 5. The estimated energy consumption for printing the print job 10 on one of the printers 4,5 may be expressed in terms of in Kilowatt-hours and/or Carbon dioxide CO₂ emission.

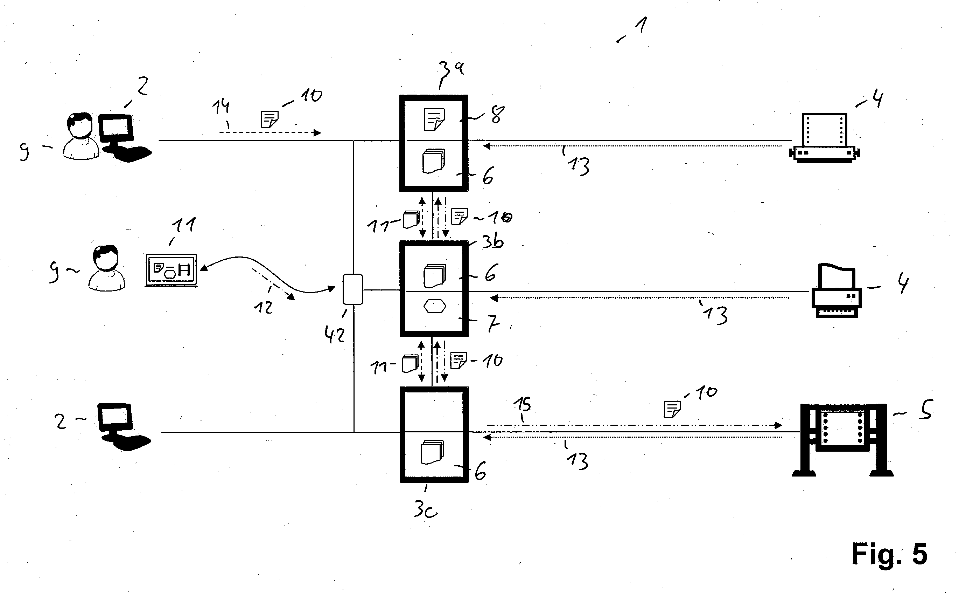

In a preferred embodiment of Fig 5, the display unit 11 is a mobile device, which is connectable via a gateway 42 with the network of the printing system 1. The user 9 may choose one of the printers 4,5 for printing out the print job 10. In case an alternative printer 5 has a more advantageous energy consumption compared to the already estimated energy consumption of the chosen printer 4 by the user 10, the user 9 is shown the alternative printer 5 on a map and/or with routing information to reach the alternative printer 5. The print job 10 may also be released 15 by the mobile display unit 11. Additionally, in case all printers 4,5 within the network are in a disadvantageous energy consumption state, the release 15 of the print job 10 on the print server 3 is delayed until at least one of the printers 4,5 is in an advantageous energy consumption state. The print servers 3 within the printing system 1 share the print job 10 and the device status of the printers 4,5 with each other. For example, if a print job is sent to a designated printer 5 by the last user 9 within the office at night and some of the electricity facilities within the office and all printers 4,5 are already in a sleep-mode, the user 9 is asked to print out the print job 10 on the next morning, if appropriate.

The present invention also includes a simulation feature about the estimated energy consumption of the printer 4,5 within the printing system 1. According to a preferred embodiment of the present invention the estimated energy consumption of the printer 4,5 may be simulated directly on one of the print servers 3a,3b,3c, so that there is no need for print server 3q,3b,3c to request the actual device status of the printers 4,5,. This procedure also reduces the energy consumption of the printing system 1.

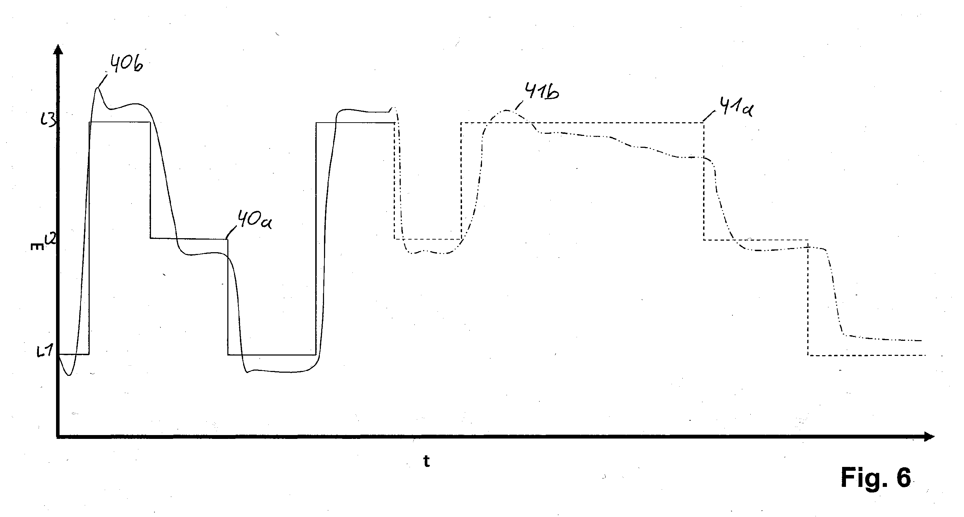

Fig. 6 illustrates two estimated energy consumption profiles for the designated printer 5 (not shown in Fig. 6). In a preferred embodiment of the present invention an idealised energy consumption profile 40a or the actual energy consumption profile 40b of the designated printer 5 is used for a simulation of the energy consumption for printing at least one print job 10 (not shown in Fig. 6) by the user 9 (not shown in Fig. 6). The idealised energy consumption 40a in Fig. 6 has three different energy levels of the designated printer 5: busy-mode (L1), idle-mode (L2) and sleep-mode (L3).

Based on this idealised energy consumption 40a or on the actual energy consumption 40b of the designated printer 5, the print server 3a,3b,3c may determine the future energy consumption 41a,41b for printing out all relevant print jobs 10 of the user 9 on the designated printer 5. Preferably the estimated energy consumption will be determined based on the recent energy consumption 40a,40b of the designated printer 5 in combination with predefined energy consumption rates for the designated printer 5 and the data size of the print jobs 10. The result of this determination is a simplified energy consumption profile 41a for printing selected print jobs 10 of the user 9 on the designated printer 5. Alternatively, a future energy consumption profile 41b may be determined more accurately based on the recent energy consumption 40a,40b of the designated printer 5 in combination with the simulation of the device status and/or energy consumption of the designated printer 5. The simulation of the future energy consumption 41a,41b may take the present status of the designated printer 5, recent energy consumptions for similar print jobs 10 and/or the status of the consumables into account. In a case where the future energy consumption is simulated on at least one of the print servers 3a,3b,3c, the network traffic between the print servers 3a,3b,3c and the printers 4,5 and therefore the estimated energy consumption of the printing system 1 itself is reduced.

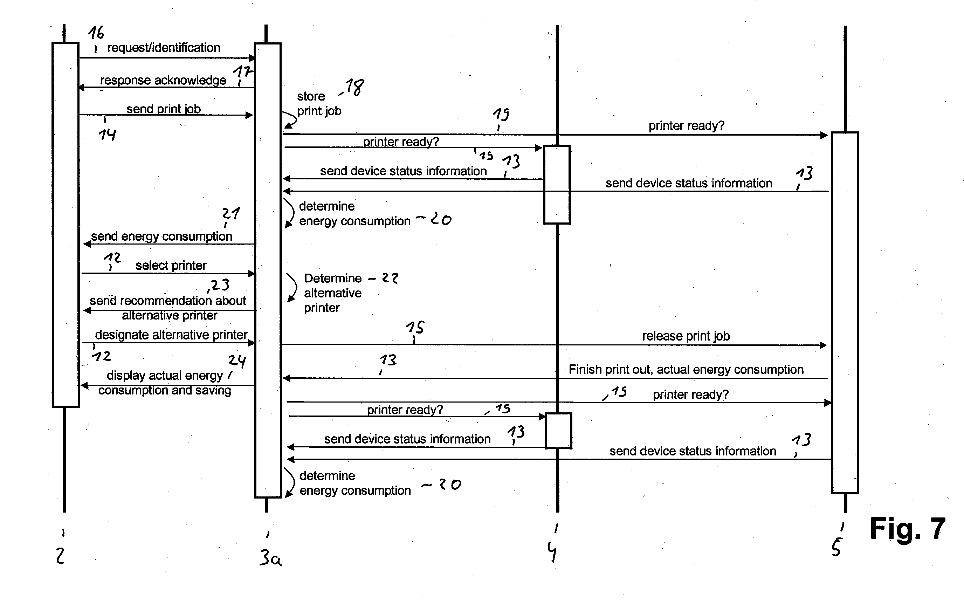

Figure 7 is a Unified Modelling Language (UML) diagram showing one client terminal 2, one print server 3a and two printers 4,5. The client terminal 2 builds up a connection to the print server 3a and sends a client authentication request 16 to the print server 3a. The print server 3a acknowledges 17 the client authentication request 16 and the client terminal 2 sends 14 the print job 10 (not shown in Figure 7) to the print server 3a, if the user 9 decides that the print job 10 is to be printed. The print server 3a stores 18 the print job 10 onto a hard disk 8 (not shown in Fig. 7). Additionally, the print server 3 initiates a handshaking procedure for requesting 19 the printer-ready-status of the printers 4,5. The printers 4,5 send back device status information 13 to the print server 3 after receiving the printer ready request 19.

Based on the device status information of each printer 4,5 the print server 3a determines 20 the estimated energy consumption of the print job 10 on each printer 4,5. The estimated energy consumption is routed 21 to the client terminal 2 and displayed to the user 9. The user 9 may choose 12 a printer 4 and in case an alternative printer 5 seems to be more advantageous, the print server 3a asks for a confirmation 22 and sends a recommendation 23 for the more advantageous printer 5 to the client terminal 2. Based on that information, the user may select 12 the printer 5 and the print server 3a releases 15 the print job 10 to the designated printer 5. After print out on the designated printer 5 a finishing message 13 is sent to the print server 3. Based on the finishing message 13 the print server 2 routes the actual energy consumption to the client terminal 2 and requests a further energy consumption state update 19 from the printers 4,5 for a possible next printing of another print job 10. Based on the new device status information 13 the print server 3a determines the actual energy consumption of the printers 4,5 for a possible further print job 10.

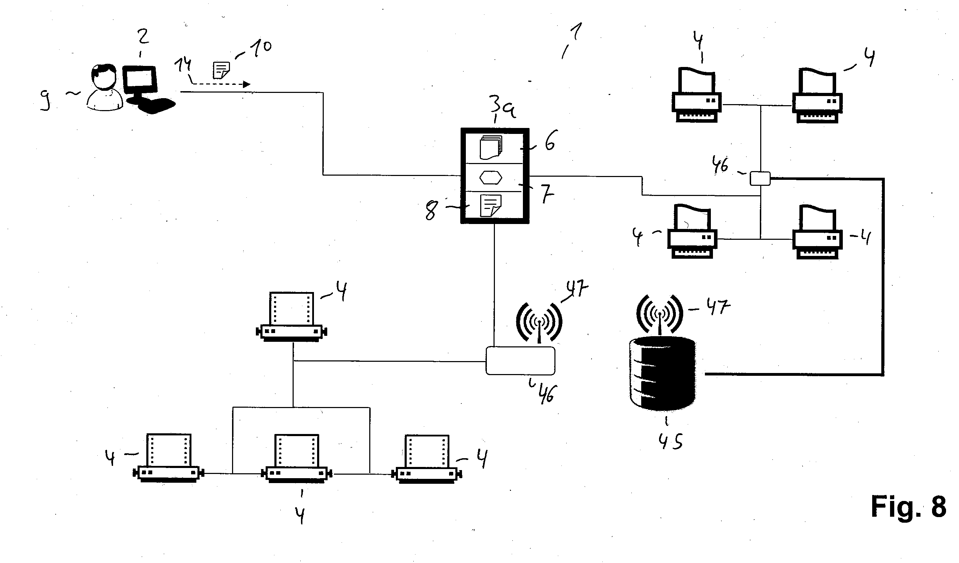

Fig. 8 is showing a chart of the printing system 1 with eight printers 4 and one client terminal 2. The user 9 sends 14 a print job 10 to the print server 3a, on which the print job 14 is stored. Additionally, an energy management server 45 is connected with energy meter and control devices 46, which are attached to two printer 4 groups according to the example of Fig. 8.

The energy meter and control devices 46 monitor the actual energy consumption and may control the energy consumption of the printers 4 by changing the energy state (off, sleep, idle, busy) of at least one of the printers 4 and/or of one printer 4 group. The energy management server 45 may be connected by wire or by wireless communication equipment 47 with the energy meter and control device 46.

The energy management server 45 may determine the actual or future energy consumption of at least one printer 4, at least one printer 4 group or the printing system 1 and changes actively the energy status of at least one device 2,3a,4 of the printing system 1 by operating relevant energy meter and control devices 46. This energy control, sometimes also named as smart grid (e.g. US 2011/0069613 A1), is according to the present invention not only monitoring the device status of at least one printer 4 to determine the estimated energy consumption, it also changes actively the energy mode of at least one of the printers 4 to operate the printing system 1 in a very energy efficient way. The estimated energy consumption of the printing system 1 may be controlled by an energy management server 45 as part of the printing system 1 or by an external energy management server 45 connected via a network with the printing system 1. It would be appreciated that the energy management server 45 may be controlled by a public utility company for managing the energy consumption of the printing system 1 in view of the overall energy consumption of a city or region. In this case, the public utility company may have a remote control on the printing system 1 by managing the energy management server 45 designated to the printing system 1.

### Reference Numerals

- 1: printing system
- 2: client terminal
- 3a,3b,3c: print server
- 4: printer
- 5: designated printer
- 6: means for collecting the device status of the printer
- 7: means for determining the energy consumption
- 8: means for storing the print job
- 9: user
- 10: print job
- 11: means for displaying the energy consumption
- 12: releasing the print job from the print queue to the designated printer
- 13: sending the device status to the print server
- 14: sending the print job to the print server
- 15: routing the print job to the designated printer
- 16: requesting and identification
- 17: responding acknowledge
- 18: sending print job
- 19: requesting printer ready
- 20: determining energy consumption
- 21: sending energy consumption
- 22: confirming the user selection and recommending a alternative printer
- 23: sending recommendation about alternative printer
- 24: displaying actual energy consumption and energy/cost saving
- 25: central processing unit (CPU)
- 26: read only memory (ROM)
- 27: hard disk
- 28: random access memory (RAM)
- 29: display unit
- 30: operation unit
- 31: communication control unit
- 32: image reader
- 33: recording unit
- 34: image memory
- 35: image processing unit
- 36: authentication processing unit
- 37: I/O control unit
- 38: card reader
- 39: system bus
- 40a,40b: actual energy profile
- 41a,41b: simulated energy profile
- 42: gateway
- 43: notification
- 44: administrator terminal
- 45: energy management server
- 46: energy meter and control device
- 47: wireless communication antenna

## Claims

1. A method of processing a print job within a printing system, the printing system having at least one printer and at least one client terminal for preparing the print job, and the or each printer and the or each client terminal being connected to a network, the method comprising the steps of:
■collecting the device status of at least one said printer;
■determining the energy consumption for printing the print job on the printer based on the device status of the printer; and
■displaying a user the energy consumption for printing the print job on the printer.

2. Method as claimed in claim 1, wherein the energy consumption is the actual energy consumption and/or the estimated energy consumption and/or the simulated energy consumption.

3. Method as claimed in claim 1 or 2, wherein the device status are the different energy consumption levels of the printer and/or the duration times of the energy consumption levels of the printer, the state of the printer consumables and/or the error state average and resolution time for each error of the printer.

4. Method as claimed in any preceding claim 1 to 3, wherein the energy consumption for printing the print job on the printer is determined based on the recent device status of the printer in combination with pre-defined consumption values for the printer or in combination with the actual energy consumption of the printer.

5. Method as claimed in any preceding claim 1 to 4, wherein the energy consumption for printing the print job on the printer is determined based on the device status of the printer accumulated for a predefined time period in the past.

6. Method as claimed in any preceding claim 1 to 5, wherein in case the energy consumption for printing the print job on the printer is above a predefined threshold, a notification is sent.

7. Method as claimed in any preceding claim 1 to 6, wherein the energy consumption for printing the print job on the printer is expressed in terms of electric energy kilowatt-hours and/or carbon dioxide CO₂ emission.

8. Method as claimed in any preceding claim 1 to 7, wherein the energy consumption for printing the print job on each printer is displayed on the client terminal and/or at least one of the printers and/or on a print server, managing the transfer of the print jobs within the network, and/or on an additional network device.

9. Method as claimed in any preceding claim 1 to 11, wherein the actual and future energy consumption of the printer is simulated based on the recent device status of the printer.

10. A printing system for processing a print job, the printing system having at least two printers, at least one client terminal for preparing the print job, at least one print server, and the printers, the client terminal and the or each print server being connected to a network, and the printing system comprising:
■means for storing the print job sent by the client terminal via the network to the print server;
■means for determining the energy consumption for printing the print job on at least one of the printers;
■means for displaying a user the energy consumption for printing the print job on at least one of the printers;
■means for designating at least one of the printers by a user to be a designated printer after displaying the energy consumption for the printing of the print job at least one of the printers to the user; and
■means for releasing the print job on the print server to be printed on the designated printer in case the user accesses to the print server.

11. Printing system as claimed in claim 10, wherein the client terminal sends the print job via the network to the print server and the print server stores the print job within a print queue and the print queue is accessible by the user via the network.

12. Printing system as claimed in any preceding claim 10 to 11, wherein the print server converts the print job into an appropriate printer-ready format, in case the original printer-ready format of the print job may not be processed correctly on the designated printer.

13. Printing system as claimed in any preceding claim 10 to 12, wherein the energy consumption for printing the print job on the at least one of the printers is displayed on the client terminal and/or at least one of the printers and/or print server and/or on an additional network device.

14. Printing system as claimed in any preceding claim 10 to 13, wherein the available printers within the network and the energy consumptions for printing the print job on each available printer are show on a display of at least one of the printers and/or client terminal and/or print server and/or additional network device and one of the available printers may be selected by the user to be the designated printer.

15. Printing system as claimed in any preceding claim 10 to 14, wherein the energy consumption of at least one of the printers and/or the printing system is measured by at least one energy meter and control device connected to at least one device of the printing system.

16. A program which when run on a computer means as part of a printing system causes the computer means to perform a method according to at least one of the claims 1 to 9.
